# EUROPEAN PATENT SPECIFICATION

(11) **EP 3 809 279 B1**
(45) Date of publication and mention of the grant of the patent: **01.10.2025**
(21) Application number: 20201754.7
(22) Date of filing: 14.10.2020
(51) Int. Cl.: G06N 20/00, G06Q 10/107

(54) **DEVICE, SYSTEM AND METHOD FOR TRAINING MACHINE LEARNING MODELS USING MESSAGES ASSOCIATED WITH PROVIDER OBJECTS**
VORRICHTUNG, SYSTEM UND VERFAHREN ZUM TRAINIEREN VON MASCHINENLERNMODELLEN UNTER VERWENDUNG VON MIT ANBIETEROBJEKTEN VERBUNDENEN NACHRICHTEN
DISPOSITIF, SYSTÈME ET PROCÉDÉ DE FORMATION DE MODÈLES D'APPRENTISSAGE MACHINE À L'AIDE DE MESSAGES ASSOCIÉS À DES OBJETS FOURNISSEUR

(30) Priority: 18.10.2019 FR 1911671; 18.10.2019 US 201916656820
(43) Date of publication of application: 21.04.2021
(73) Proprietor: Amadeus S.A.S., 06410 Biot (FR)
(72) Inventor: AMADIEU, Olivier, 06410 Biot - Sophia Antipolis (FR); CAZORLA, Jean-Marie, 06410 Biot - Sophia Antipolis (FR); BEAUDEQUIN, Philippe Clement Marcel, 06410 Biot - Sophia Antipolis (FR); HAAS-FRANGI, Christian, 06410 Biot - Sophia Antipolis (FR); MAILLOT, Nicolas Eric, 06410 Biot (FR)
(74) Representative: Samson & Partner Patentanwälte mbB

(56) References cited:
- WO-A1-01/61505
- WO-A1-2018/231187
- FR-A1- 3 102 283
- US-A1- 2006 149 713
- YOAV GOLDBERG: "A Primer on Neural Network Models for Natural Language Processing", JOURNAL OF ARTIFICIAL INTELLIGENCE RESEARCH, vol. 57, 2 November 2016 (2016-11-02), pages 345 - 420, XP055385582

## Description

### Field

The specification relates generally to machine learning, and specifically to a device, system and method for training machine learning models using messages associated with provider objects.

### Background

The provision of various products, including for example travel-related goods and services (e.g. flights, hotel reservations, and the like) typically requires various discrete entities to exchange data defining various aspects of the products. Examples of such entities, in the context of travel-related products, include airlines, travel agencies, end users, reservation systems, and the like. Although such entities may be configured to exchange data according to a standardized format (e.g. according to the eXtensible Markup Language (XML)-based New Distribution Capability (NDC) standard in the context of travel-related products), they may nonetheless employ different mechanisms to initiate the exchange of data. Examples of systems and methods known in the art can be found in the documents US2006/149713 A1, WO2018231187 and WO0161505.

### Summary

An aspect of the specification provides a method for training machine learning models using messages associated with provider objects comprising: receiving, at one or more computing devices, messages associated with provider objects representing items provided by one or more provider systems, the messages having more than one format; storing, at one or more memories, harmonized objects corresponding to the messages, the harmonized objects generated using one or more mappings of harmonized data of the harmonized objects to message data of the messages, the harmonized objects having common formats for a harmonized object type; extracting, at the one or more computing devices, from the harmonized objects, for a given machine learning model, given machine learning training data; generating, at the one or more computing devices, for the given machine learning model, using the given machine learning training data, at least one machine learning classifier; and providing, by the one or more computing devices, the at least one machine learning classifier to the given machine learning model at a server configured to implement the given machine learning model on received provider objects.

In some embodiments, for the given machine learning model, given harmonized data of the harmonized objects is identified as the given machine learning training data.

In some embodiments, the given machine learning training data comprises input and output extracted from the messages, the input comprising data from a message corresponding to a response for the items provided by the one or more provider systems, and the output comprising respective data corresponding to a request that resulted in the response.

In some embodiments, the method further comprises extracting, at the one or more computing devices, from the harmonized objects, for a plurality of given machine learning models, given respective machine learning training data; generating, at the one or more computing devices, for the plurality of given machine learning models, using the given respective machine learning training data, at least one respective machine learning classifier; and providing, by the one or more computing devices, the at least one respective machine learning classifier to the plurality of given machine learning models at one or more servers configured to implement the plurality of given machine learning models on the received provider objects.

In some embodiments, the given machine learning model is for one or more of: categorizing a received provider object according to reusability; categorizing the received provider object according to context characteristics; determining a criticality of a received provider object; and combining two or more items of the received provider objects.

In some embodiments, the given machine learning model is for categorizing a plurality of provider objects by one or more of reusability and context characteristics, comprising categorizing a first number of provider objects into a first category defined by first reusability and context characteristics; in response to receiving a number of further requests for provider objects with second reusability and context characteristics substantially different from the first reusability and context characteristics, automatically categorizing a second number of provider objects with the second reusability and context characteristics and storing the second number of provider objects as categorized, thereby generating a new second category.

In some embodiments, categorizing the plurality of provider objects by one or more of reusability and context characteristics comprises in response to receiving a number of further requests indicating a subset of the first reusability and context characteristics, automatically categorizing provider objects with the subset of the first reusability and context characteristics and storing the provider objects with the subset of the first reusability and context characteristics as categorized, thereby generating a new third category.

In some embodiments, the messages are received from an event hub device comprising a proxy for at least a server configured to respond to requests for the items provided by the one or more provider systems.

Another aspect of the specification provides a computing device for training machine learning models using messages associated with provider objects comprising: one or more memories; a communication interface; and a controller configured to: receive, via the communication interface, messages associated with provider objects representing items provided by one or more provider systems, the messages having more than one format; store, at the one or more memories, harmonized objects corresponding to the messages, the harmonized objects generated using one or more mappings of harmonized data of the harmonized objects to message data of the messages, the harmonized objects having common formats for a harmonized object type; extract, from the harmonized objects, for a given machine learning model, given machine learning training data; generate, for the given machine learning model, using the given machine learning training data, at least one machine learning classifier; and provide, via the communication interface, the at least one machine learning classifier to the given machine learning model at one or more servers configured to implement the given machine learning model on received provider objects.

In some embodiments of the computing device, for the given machine learning model, given harmonized data of the harmonized objects is identified as the given machine learning training data.

In some embodiments of the computing device, the given machine learning training data comprises input and output extracted from the messages, the input comprising data from a message corresponding to a response for the items provided by the one or more provider systems, and the output comprising respective data corresponding to a request that resulted in the response.

In some embodiments, the controller is further configured to extract, from the harmonized objects, for a plurality of given machine learning models, given respective machine learning training data; generate, for the plurality of given machine learning models, using the given respective machine learning training data, at least one respective machine learning classifier; and provide, via the communication interface, the at least one respective machine learning classifier to the plurality of given machine learning models at one or more servers configured to implement the plurality of given machine learning models on the received provider objects.

In some embodiments of the computing device, the given machine learning model is for one or more of: categorizing a received provider object according to reusability; categorizing the received provider object according to context characteristics; determining a criticality of a received provider object; and combining two or more items of the received provider objects.

In some embodiments of the computing device, the given machine learning model is for categorizing a plurality of provider objects by one or more of reusability and context characteristics, comprising categorizing a first number of provider objects into a first category defined by first reusability and context characteristics; in response to receiving a number of further requests for provider objects with second reusability and context characteristics substantially different from the first reusability and context characteristics, automatically categorizing a second number of provider objects with the second reusability and context characteristics and storing the second number of provider objects as categorized, thereby generating a new second category.

In some embodiments of the computing device, categorizing the plurality of provider objects by one or more of reusability and context characteristics comprises in response to receiving a number of further requests indicating a subset of the first reusability and context characteristics, automatically categorizing provider objects with the subset of the first reusability and context characteristics and storing the provider objects with the subset of the first reusability and context characteristics as categorized, thereby generating a new third category.

In some embodiments of the computing device, the messages are received from an event hub device comprising a proxy for at least a server configured to respond to requests for the items provided by the one or more provider systems.

Another aspect of the specification provides a non-transitory computer-readable medium storing a computer program for training machine learning models using messages associated with provider objects, wherein execution of the computer program is for: receiving, at one or more computing devices, messages associated with provider objects representing items provided by one or more provider systems, the messages having more than one format; storing, at one or more memories, harmonized objects corresponding to the messages, the harmonized objects generated using one or more mappings of harmonized data of the harmonized objects to message data of the messages, the harmonized objects having common formats for a harmonized object type; extracting, at the one or more computing devices, from the harmonized objects, for a given machine learning model, given machine learning training data; generating, at the one or more computing devices, for the given machine learning model, using the given machine learning training data, at least one machine learning classifier; and providing, by the one or more computing devices, the at least one machine learning classifier to the given machine learning model at a server configured to implement the given machine learning model on received provider objects.

In some embodiments of the non-transitory computer-readable medium, for the given machine learning model, given harmonized data of the harmonized objects is identified as the given machine learning training data.

In some embodiments of the non-transitory computer-readable medium, the given machine learning training data comprises input and output extracted from the messages, the input comprising data from a message corresponding to a response for the items provided by the one or more provider systems, and the output comprising respective data corresponding to a request that resulted in the response.

Another aspect of the specification provides a computer program product comprising program code instructions stored on a computer readable medium to execute the method steps according any one of the method aspects and embodiments set out above when said program is executed on a computer.

### Brief description of the drawings

For a better understanding of the various examples described herein and to show more clearly how they may be carried into effect, reference will now be made, by way of example only, to the accompanying drawings in which:
FIG. 1] depicts a system for training machine learning models using messages associated with provider objects, according to non-limiting examples.
FIG. 2 depicts a computing device configured to harmonize and store messages associated with provider objects, according to non-limiting examples.
FIG. 3 depicts a computing device used for training machine learning models using messages associated with provider objects, according to non-limiting examples.
FIG. 4 depicts a method for training machine learning models using messages associated with provider objects, according to non-limiting examples.
FIG. 5 depicts messages and/or provider objects being received in the system of FIG. 1, according to non-limiting examples.
FIG. 6 depicts mapping between messages and a harmonized object, according to non-limiting examples.
FIG. 7 depicts machine learning models being trained in the system of FIG. 1, according to non-limiting examples.
FIG. 8 depicts the segmentation of a cache into categories or logical portions.

### Detailed description

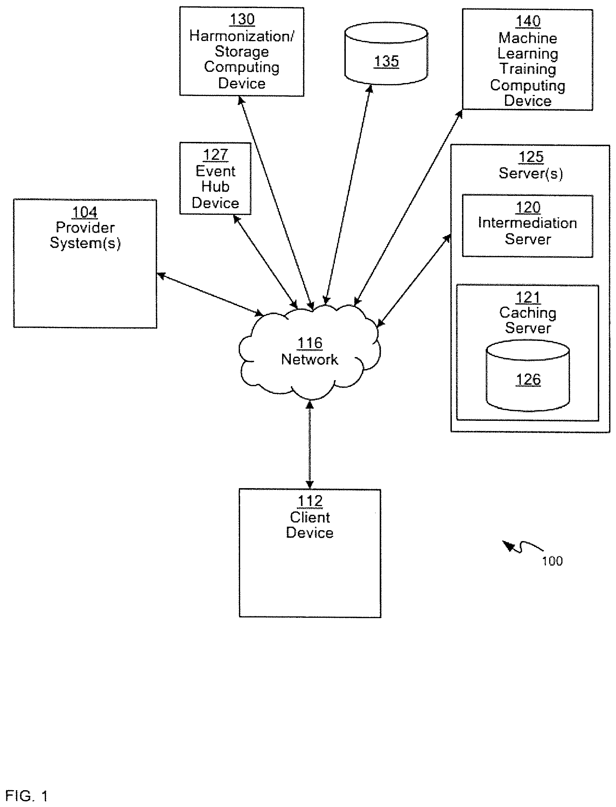

FIG. 1 depicts a system 100 for training machine learning models using messages associated with provider objects. The provider objects, in the examples discussed herein, may comprise data objects and/or data records which correspond to products and/or items, such as travel-related goods and services (e.g. flights, hotel reservations, car rentals and the like), provided by a provider system. More specifically, the products and/or items discussed in the examples below may be flight tickets and related services (e.g. baggage check services, in-flight food, entertainment and the like). However, the systems and methods discussed below can also be applied to various other types of data objects and/or items.

Delivery of the items mentioned above is typically controlled by a provider entity, such as an airline in the case of the items discussed in connection with the examples provided herein. The system 100 includes one or more provider systems 104 (e.g. one or more servers or other suitable computing devices), which in this example is operated by one or more provider entities. The system 100 can include a plurality of provider systems 104, each operated by respective provider entities (e.g. other airlines), although only one provider system 104 is shown for illustrative purposes. The provider objects may be in any suitable format including, but not limited to Edifact recommendations in the context of Global Distribution System (GDS)-based data exchange, offer records in the context of New Distribution Capability (NDC)-based data exchange, and/or any other suitable format. Indeed, the provider objects may comprise data objects and/or data records, for example storing an Edifact recommendation or an NDC offer, and/or any other suitable data representing at least one item provided by the provider system 104.

Each provider object defines an item, or a combination of items, which may be offered for purchase (e.g. by end users of the items) including, but not limited to one or more of flights, train rides, hotel stays, airport lounge access, seat upgrades, baggage check services, in-flight food, entertainment and the like.

In the examples discussed below, each provider object may define a flight operated by the provider entity, and/or ancillary services associated with the flight. Each provider object therefore contains various fields. Certain fields define item attributes, such as product object identifiers (e.g. service identifiers, item identifiers, product identifiers and the like), locations, dates and times corresponding to the products (e.g. flight times and other itinerary data). The type of fields and/or data of a provider object may depend on a type of a provider object. For example, provider objects corresponding to flights may include flight identifiers, whereas provider objects corresponding to other travel-related items, such as an offer for a train ride, a hotel, accessing an airport lounge and/or an offer for a premium seat upgrade, may include information related to the train ride, the hotel, the lounge, the premium seat, etc.

As will be described below, the system 100 further comprises a network 116 and an intermediation server 120. The network 116 comprises any suitable combination of local and wide area networks, including the Internet, such that the components of the system 100 may communicate. The intermediation server 120 generally intermediates between the client device 112 and the provider system 104, for example such that the client device 112 may request products from the provider system 104, and/or more than one provider system 104, via the intermediation server 120.

As depicted, the system 100 further comprises a caching server 121, which caches and/or stores provider objects received from various sources in the system 100 including, but not limited to, the provider system 104. As will be explained below, the caching server 121 further provides responses that include provider objects stored at a cache to a requesting device, such as the client device 112, for example via the intermediation server 120. While the servers 120, 121 may be two separate devices, the functionality of the servers 120, 121 may be combined into one server 125 and/or implemented in a cloud computing environment using a plurality of servers and/or one or more servers. The servers 120, 121 may be referred to hereafter as the one or more servers 120, 121.

As depicted, the caching server 121 maintains a cache and/or a memory 126, which may be implemented as one or more memories. The memory 126 contains provider objects as received at the caching server 121 from various sources of provider objects in the system 100. The caching server 121 may implement machine learning models to categorize provider objects by one or more of reusability and context characteristics, and store the provider objects at the memory 126 as categorized; the caching server 121 may further determine whether a stored and categorized provider object is currently valid, as described in more detail below. The one or more servers 120, 121 may respond to requests for items provided by the provider system 104 using provider objects stored at the memory 126, for example to reduce time to respond to a request.

Functionality of the one or more servers 120, 121 is described in Applicant's co-pending application titled "DEVICE, SYSTEM AND METHOD FOR PROVIDING PROVIDER OBJECTS FROM A CACHE", having the filing number FR1911662, having the same filing/priority date as the present specification.

The client device 112, in the present example, may be operated by a travel agent entity, and therefore generates and transmits requests for provider objects (e.g. representing products which may be for purchase), to the provider system 104, via the intermediation server 120, on behalf of end users (e.g. travelers). The system 100 can include a plurality of client devices 112, although only one client device 112 is shown in FIG. 1 for illustrative purposes. Put another way, the intermediation server 120 intermediates between the client device 112 and the provider system 104 and receives requests from the client device 112.

In general, requesting and/or ordering items represented by provider objects occur in the system 100 via exchange of messages, for example between the intermediation server 120 and the provider system 104. Such messages may hence be associated with provider objects, and may include messages for one or more of: requesting provider objects; requesting further information associated with provider objects; providing provider objects; ordering items represented by provider objects, and the like.

As depicted, the system 100 further comprises an event hub device 127, which may receive messages associated with provider objects, from the provider system 104. The event hub device 127 may comprise a proxy for at least the intermediation server 120 such that messages received by at least the intermediation server 120 are received at the event hub device 127. For example, when the provider system 104 transmits a message and/or a response to the intermediation server 120 that includes a provider object, the message and/or the response may first be received at the event hub device 127 and then transmitted to the intermediation server 120. Put another way, when provider objects are requested from a provider system, the provider objects may be pushed to the event hub device 127 to make them accessible to other components of the system 100, other than a current instance of the intermediation server 120, as described in more detail below. Indeed, the event hub device 127 may be configured to receive messages and/or responses that include provider objects from all provider systems 104 of the system 100. Such "traffic" may be "live" and include messages generated due to provider objects requested by the client device 112. However, in other examples, such traffic may not be "live"; in these examples, a component of the system 100, such as a traffic generator, which may be a component of the intermediation server 120 and/or a separate component, and the like, may automatically and/or periodically request provider objects from one or more provider systems 104 via messages, for example to have a record of offers for flights to given locations on particular days; such requests may be transmitted and/or triggered by the intermediation server 120.

As depicted, the system 100 further comprises a computing device 130 which receives, from the event hub device 127, the messages received at the event hub device 127 as described above. The event hub device 127 may further provide provider objects to the caching server 121 for storage at the memory 126.

As depicted, the system 100 further comprises one or more memories 135 which, as depicted, may comprise a database. While the one or more memories 135 is depicted as a standalone component of the system 100, the one or more memories 135 may be component of a computing device, such as the computing device 130 and/or a computing device 140 and/or another computing device (e.g. for maintaining the one or more memories 135). For simplicity, the one or more memories 135 are interchangeably referred to hereafter as the memory 135.

The computing device 130 generally formats (e.g. translates, and the like) the messages received from the event hub device 127 into harmonized objects and/or data objects, the harmonized objects generated using one or more mappings of harmonized data of the harmonized objects to messages data of the messages, the harmonized objects having common formats for a harmonized object type. Functionality of the computing device 130 will be described in more detail below. The computing device 130 further stores the harmonized objects at the memory 135. As such, the computing device 130 may referred to as a harmonization/storage computing device 130.

The system 100 further comprises the computing device 140 for training machine learning models using the messages associated with provider objects, and in particular using the harmonized objects stored at the memory 135. In particular, the computing device 140 may be configured to: extract, from the harmonized objects, for a given machine learning model, given machine learning training data, generate, for the given machine learning model, using the given machine learning training data, at least one machine learning classifier; and provide the at least one machine learning classifier to the given machine learning model implemented at the caching server 121 on received provider objects. As such, the computing device 140 may referred to as a machine learning training computing device 140. Hence, as used herein the term machine learning model may to refer to a mathematical model which is based on sample data, known as training data and/or a training dataset and/or (herein) as machine learning training data, in order to make predictions and/or decisions for a given task without being explicitly programmed to perform the given task; for example a machine learning model may implement a machine learning classifier which performs the given task. A machine learning training algorithm, as used herein, may refer to an algorithm which builds and/or trains a machine learning model, for example by generating machine learning classifiers, using a training data and/or a training dataset and/or (herein) machine learning training data. Hence, the computing device 140 may implement machine learning training algorithms to generate machine learning classifiers to "train" a machine learning model.

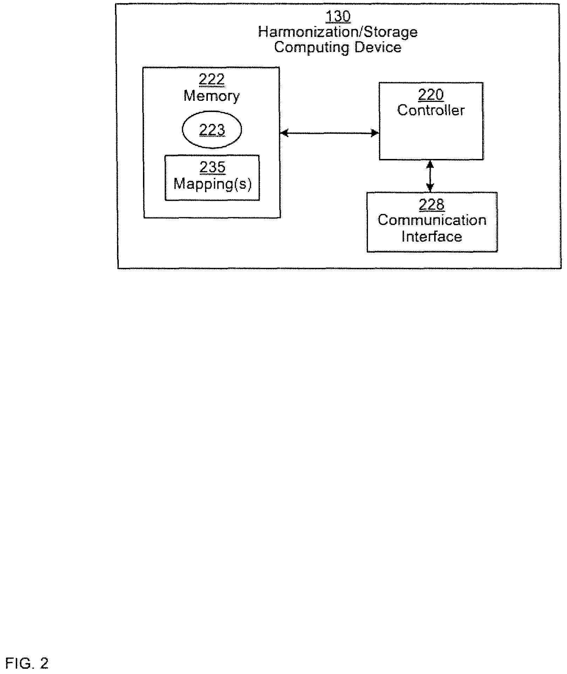

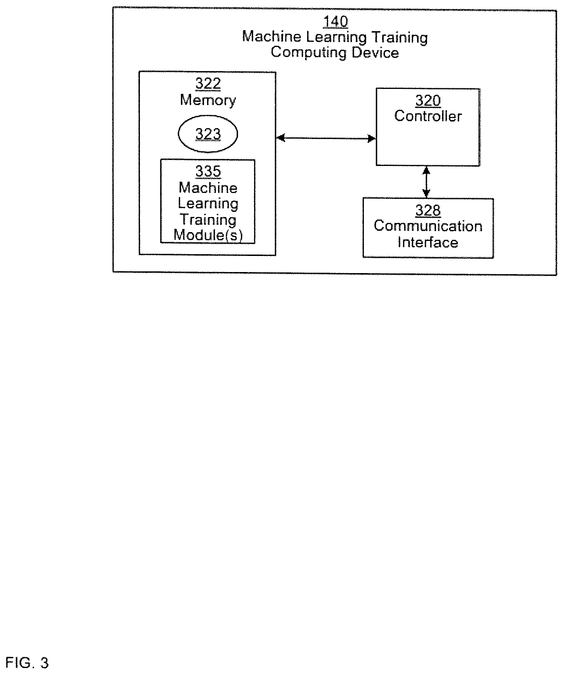

Before discussing the functionality of the system 100 in greater detail, certain components of the computing devices 130, 140 will be discussed in greater detail with reference to FIG. 2 and FIG. 3. While depicted as two separate devices, the devices 130, 140 may comprise one or more computing devices and/or one or more cloud computing devices that may be geographically distributed. The computing device 130 will first be described with respect to FIG. 2.

As shown in FIG. 2, the computing device 130 includes at least one controller 220, such as a central processing unit (CPU) or the like. The controller 220 is interconnected with a memory 222 storing an application 223, the memory 222 implemented as a suitable non-transitory computer-readable medium (e.g. a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 220 and the memory 222 are generally comprised of one or more integrated circuits (ICs).

The controller 220 is also interconnected with a communication interface 228, which enables the computing device 130 to communicate with the other components of the system 100 (i.e. the event hub device 127) via the network 116. The communication interface 228 therefore includes any necessary components (e.g. network interface controllers (NICs), radio units, and the like) to communicate via the network 116. The specific components of the communication interface 228 are selected based on upon the nature of the network 116. The computing device 130 can also include input and output devices connected to the controller 220, such as keyboards, mice, displays, and the like (not shown).

The components of the computing device 130 mentioned above can be deployed in a single enclosure, or in a distributed format. In some examples, therefore, the computing device 130 includes a plurality of processors, either sharing the memory 222 and communication interface 228, or each having distinct associated memories and communication interfaces.

While not depicted, the memory 222 may include the memory 135 (and/or a portion thereof). However, in other examples, memory 135 may be external to the computing device 130, and accessible to the controller 220, for example via the communication interface 228. Indeed, the memory 135 may be distributed between and/or shared with the computing device 140.

The memory 222 also stores a plurality of computer-readable programming instructions, executable by the controller 220, in the form of various applications, including the application 223. As will be understood by those skilled in the art, the controller 220 executes the instructions of the application 223 (and any other suitable applications) in order to perform various actions defined by the instructions contained therein. In the description below, the controller 220, and more generally the computing device 130, are said to be configured to perform those actions. It will be understood that they are so configured via the execution (by the controller 220) of the instructions of the applications stored in memory 222.

As depicted, the memory 222 further stores mappings 235 between the messages and the harmonized objects. For example, the mappings 235 may map fields and/or message data of the messages to corresponding fields and/or harmonized object data of the harmonized objects. Indeed, the harmonized object generally have a common format for a harmonized object type. For example, messages representing responses for provider objects may have different formats depending on a source of a response, whether a response is in an NDC or GDS format, and the like, while harmonized objects representing the response may have a common format for the responses. The mappings 235 may hence map different formats of messages that include responses from the provider systems 104. Similarly, messages that represent provider objects may have different formats depending on a source of the provider objects, whether the provider objects comprise an NDC offer or an Edifact recommendation, and the like, while harmonized objects representing the provider objects may have a common format for the provider objects. The mappings 235 may hence map different formats of messages and/or provider objects to the common format for the provider objects.

In particular, the mapping 235 may indicate fields of harmonized objects that correspond to respective fields of the messages. For example, message data of a given type, such as message data that represents provider object data, may be at a given field of a message; similarly, a harmonized object may include a corresponding given field where the message data is to be stored.

The mappings 235 may indicate correspondences between such fields of the messages and the harmonized objects such that given data from fields of the messages are used to populate given corresponding fields of the harmonized objects. In a particular example, a provider object of a message that represents a flight from an originating location to a destination location may have fields for the airline, the flight number, the originating location, the destination location, the date and the time of the flight; a corresponding harmonized object may have similar fields which are mapped to the fields of the provider object via a mapping 235. Furthermore, a message that includes a response may have data and/or metadata which may be particular to the message and/or indicative of an associated request that generated the response, such as geographic location from which the associated request originated, a time and/or date of the associated request (and/or the message), and the like; in some examples, a mapping may be further between fields of a harmonized object that is to be populated with metadata, and metadata of a message.

In general, the mappings 235 are preconfigured at the memory 222. Put another way, the mapping 235 is generated assuming that subsets of the messages, for which a given mapping 235 is generated, have a consistent (and/or same) format (e.g. messages of a given type from a given source may have a same format). However, it is understood that messages of different sources and/or of different types may have different formats, and that a mapping 235 is provided for each subset of the messages.

Hence, while only one mapping 235 is depicted, the memory 222 may store different mappings 235 for different message formats and/or different message types. For example, while only one provider system 104 is described herein, the computing device 130 may be communicating with more than one provider system 104 (e.g. of different airlines), which may each generate and/or provide respective messages (e.g. provider objects) of different formats. Alternatively, a given provider system 104 may generate and/or provide messages (e.g. provider objects) having different formats for different types of items (e.g. flight offers, lounge offers, premium seat offers, and the like). In general, the memory 222 may store a respective mapping 235 for each type of message that may be received.

However, the harmonized objects that are generated may have a consistent and/or same format for a given harmonized object type. For example, one type of harmonized object may correspond to responses for provider objects received in the messages. Another type of harmonized object may correspond to provider objects received in the messages. Different mappings 235 may be used for each given harmonized object type, and more than one mapping 235 may be for a given message type. Hence, harmonized objects representing messages having different formats for a same message type are generated in a common harmonized object format.

Formats of the messages may depend on capability of the provider systems 104 and/or sources of the messages, and be in an NDC format or a GDS format, and the like, and/or be in any suitable format. Indeed, the format. of the messages may depend on whether the provider systems 104 and/or sources of the messages are operating according to NDC or GDS based data exchange, and/or another type of data exchange format. The mappings 235 may hence be for translating NDC formatted messages of a given type, and GDS formatted messages of the given type to a common harmonized format.

Execution of the application 223, as will be discussed below, configures the computing device 130 to: receive messages associated with provider objects representing items provided by one or more provider systems 104, the messages having more than one format; and store, at the one or more memories 135, harmonized objects corresponding to the messages, the harmonized objects generated using the one or more mappings 235 of harmonized data of the harmonized objects to message data of the messages, the harmonized objects having common formats for a given harmonized object type.

The computing device 140 will next be described with respect to FIG. 3. As shown in FIG. 3, the computing device 140 includes at least one controller 320, a memory 322 storing an application 323, and a communication interface 328; the controller 320, the memory 322 and the communication interface 328 are respectively similar to the controller 220, the memory 222 and the communication interface 228, as described above.

The components of the computing device 140 mentioned above can be deployed in a single enclosure, or in a distributed format. In some examples, therefore, the computing device 140 includes a plurality of processors, either sharing the memory 322 and communication interface 328, or each having distinct associated memories and communication interfaces. While not depicted, the memory 322 may include the memory 135 (and/or a portion thereof). However, in other examples, memory 135 may be external to the computing device 140, and accessible to the controller 320, for example via the communication interface 328. Indeed, the memory 135 may be distributed between and/or shared with the computing device 130.

The memory 322 also stores a plurality of computer-readable programming instructions, executable by the controller 320, in the form of various applications, including the application 323. As will be understood by those skilled in the art, the controller 320 executes the instructions of the application 323 (and any other suitable applications) in order to perform various actions defined by the instructions contained therein. In the description below, the controller 320, and more generally the computing device 140, are said to be configured to perform those actions. It will be understood that they are so configured via the execution (by the controller 320) of the instructions of the applications stored in memory 322.

As depicted, the memory 322 further stores one or more machine learning training modules 335 (interchangeably referred to hereafter, collectively, as the modules 335 and, generically, as a module 335) which may be components of the application 323 and/or stored separately from the application 323. The modules 335 are generally for training machine learning models to perform a given respective function based on the harmonized objects stored at the memory 135. Hence, a module 335 may interchangeably be referred to as a machine learning training algorithm. A module 335 may include a given feature extractor and a given machine learning module. A given feature extractor may be configured to extract from the harmonized objects, given machine learning training data for training the given machine learning model, as described in more detail below. As described above the caching server 121 may be implementing machine learning models for example for storing received provider objects at the memory 126, and/or responding to request for provider objects using provider objects stored at the memory 126. The memory 322 may store a corresponding module 335 for each machine learning model implemented at the caching server 121.

The machine learning module 335 may include machine learning and/or deep-learning and/or neural network-based models and/or models, and the like including, but are not limited to: a generalized linear regression model; a random forest model; a support vector machine model; a gradient boosting regression model; a decision tree model; a generalized additive model; evolutionary programming models; Bayesian inference models, reinforcement learning models, and the like. However, any suitable machine learning model and/or deep learning model and/or neural network model is within the scope of present examples.

Execution of the application 323, as will be discussed below, configure the computing device 140 to: extract, from the harmonized objects, for a given machine learning model, given machine learning training data; generate, for the given machine learning model, using the given machine learning training data, at least one machine learning classifier; and provide the at least one machine learning classifier to the given machine learning model at a server (e.g. the caching server 121) configured to implement the given machine learning model on received provider objects.

While the structure of the provider system 104, the client device 112, and the servers 120, 121 is not described in detail, the provider system 104, the client device 112, and the servers 120, 121 are understood to have a similar structure as the computing devices 130, 140, but adapted for the respective functionality of the provider system 104, the client device 112, and the servers 120, 121.

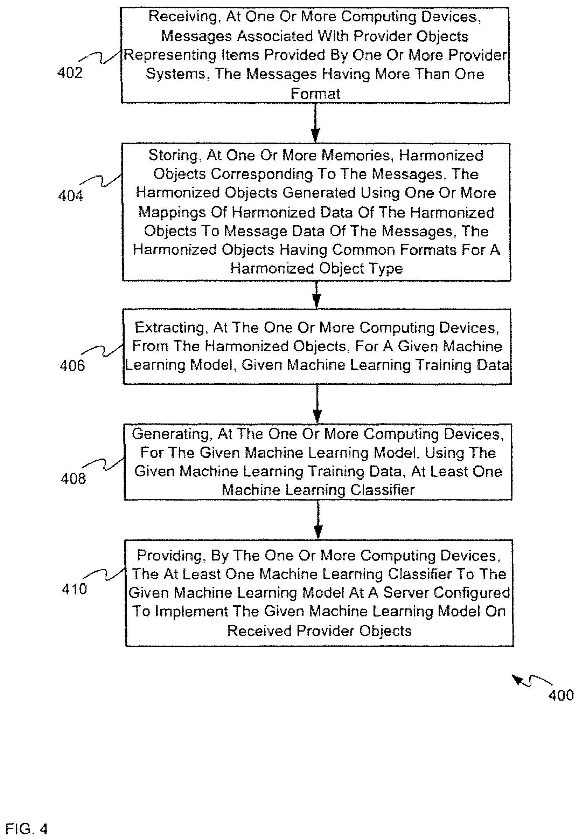

Attention is now directed to FIG. 4 which depicts a flowchart representative of a method 400 for training machine learning models using messages associated with provider objects. The operations of the method 400 of FIG. 3 correspond to machine readable instructions that are executed by the computing devices 130, 140, and specifically the controllers 220, 320. In the illustrated example, the instructions represented by the blocks of FIG. 3 are stored at the memories 222, 322 for example, as the applications 223, 323 (and/or the modules 335). The method 400 of FIG. 4 is one way in which the controllers 220, 320 and/or the computing devices 130, 140and/or the system 100 may be configured. Furthermore, the following discussion of the method 400 of FIG. 4 will lead to a further understanding of the system 100, and its various components.

The method 400 of FIG. 4 need not be performed in the exact sequence as shown and likewise various blocks may be performed in parallel rather than in sequence. Accordingly, the elements of method 400 are referred to herein as "blocks" rather than "steps." The method 400 of FIG. 3 may be implemented on variations of the system 100 of FIG. 1, as well. In particular, while the method 400 is described as being implemented by the computing devices 130, 140, the functionality of the computing devices 130, 140 may be combined into a single computing device which implements the method 400. Alternatively, the functionality of the computing devices 130, 140 may be distributed between a plurality of computing devices which implement the method 400; for example, a different computing device may be used to implement each module 335.

At a block 402, the controller 220 and/or the computing device 130 receives messages associated with provider objects representing items provided by one or more provider systems 104, the messages having more than one format. The messages may be associated with provider objects which may comprise NDC offers, or Edifact recommendations (e.g. according to a GDS format), and the like, and/or be in any suitable format; the format of the messages may hence depend on capability of the provider systems 104 and/or sources of the messages, and/or whether the provider systems 104 and/or sources of the messages are operating according to a NDC or GDS based data exchange format, and/or another type of data exchange format.

Furthermore, the messages may be received from the event hub device 127, the event hub device 127 comprising a proxy for at least the intermediation server 120, the intermediation server 120 configured to respond to requests for the items provided by the one or more provider systems 104. However, the messages may be received from any suitable source of the messages in the system 100. Indeed, in some examples, the event hub device 127 may be optional, with the computing device 130 configured to receive the messages from the sources without use of the event hub device 127.

At a block 404, the controller 220 and/or the computing device 130 stores, at the one or more memories 135, harmonized objects corresponding to the messages, the harmonized objects generated using the one or more mappings 235 of harmonized data of the harmonized objects to message data of the messages, the harmonized objects having common formats for a given harmonized object type. The mappings 235 and generation of the harmonized data objects are described above.

In general, the controller 220 and/or the computing device 130 may continue to implement the block 402 and the block 404 on an on-going basis such that the memory 135 is updated on an on-going basis, for example during implementation of the remainder of the method 400.

In general, as described above, the harmonized objects may correspond to messages which may indicate one or more of: given requests for the items provided by the one or more provider systems 104; the provider objects; successful associated responses for the items; and the like. However, the harmonized objects are harmonized to common formats for a given harmonized object type, as described above.

The harmonized objects may further include metadata associated with the messages. For example, a message (e.g. a response) may be provided in response to a request from a particular geographic location which may be stored at an associated harmonized object based on a respective mapping 235, as described above.

The harmonized objects stored at the memory 135 may hence represent the effect of providing different provider objects in response to requests received from the client device 112. As such, the harmonized objects may be used as machine learning training data, with given harmonized objects being used as machine learning training data for a given machine learning model, for example depending on the functionality of the given machine learning model.

Hence, at a block 406, the controller 320 and/or the computing device 140 extracts, from the harmonized objects, for a given machine learning model, given machine learning training data. For example, for the given machine learning model, given harmonized data of the harmonized objects may be identified as the given machine learning training data.

For example, a given machine learning model may be for one or more of: categorizing a received provider object according to reusability; categorizing the received provider object according to context characteristics; determining a criticality of a received provider object; and combining two or more items of the received provider objects. Hence, depending on the functionality of the machine learning model being trained, different harmonized objects may be used as machine learning training data. Particular modules 335 may hence be configured to extract particular harmonized objects from the memory 135 to train an associated machine learning model.

In one example, a given machine learning model may be for categorizing a received provider object according to reusability, which may include, but is not limited to: categorizing the received provider object by one or more of respective characteristics of the received provider object and respective combinations of one or more respective items represented by the received provider object (e.g. the respective items comprising products provided by the provider systems 104; however the respective items represented by the provider objects may correspond to criteria included in a request from the client device 112). For example, the characteristics used to categorize the received provider object may be characteristics of the received provider object itself, such as a flight for a given day, as represented by the received provider object, whether the received provider object is for a particular class of seat of the flight (e.g. economy, premium, business, first, and the like), a number of bags included for the flight, and the like. Hence, for example, the received provider object for a given flight on a given day, for a given class and a given number of bags may be categorized as reusable for requests for the flight on the given day, for the given class and the given number of bags; however, the received provider object may not be reusable for requests for the flight on the given day, for the given class but for a different number of bags.

In another example, a given machine learning model may be for categorizing a received provider object according to context characteristics, which may include, but is not limited to: categorizing the received provider object by one or more of a respective context in which a respective provider object was requested, a customization, a geographic location, a customer type, and a category of respective items represented by the received provider object. In particular, provider objects provided by a provider system 104 may be customized according to certain types of characteristics of a request for the provider object, such as the context characteristics listed above. For example, a given price of a provider object and/or items offered by a provider object, and the like, may be customized according to context characteristics of a request for the provider object (e.g. a request that originates in England for a given flight may result in a provider object that is different from a request, for the given flight, that originates in France). Put another way, a provider system 104 may implement a set of rules, and/or context logic, when providing a provider object in response to a request; categorizing a received provider object according to context characteristics may include categorizing the received provider object in a manner that simulates (and the like) the set of rules/or context logic implemented by the provider system 104. Such categorization may alternatively be referred to as segmentation in that a provider system 104 may provide provider objects in a segmented and/or contextual manner.

In yet another example, a given machine learning model may be for determining a validity and/or a criticality of a received provider object which may include, but is not limited to, determining whether the received provider object is currently valid. For example, a received provider object may include a time-to-live (TTL) field which generally indicates a length of time that a provider designates the received provider object to be valid (e.g. a length of time, such as 30 minutes, an offered price for a flight may be valid). However received provider objects may be valid for longer than the length of time of the TTL field; for example, a flight associated with the received provider object may be six months from a date that the received provider object was generated, and an offered price may not change and/or expire for a given time period that is longer than the length of time of the TTL field (e.g. four months), and/or the given time period may be based on loads and/or seasonality. Hence, in these examples, the given machine learning model may determine criticality of a received provider object by determining that a current time does not exceed one or more of an estimated expiry time and an estimated (or non-estimated) TTL value of a received provider object.

At a block 408, the controller 320 and/or the computing device 140 generates, for the given machine learning model, using the given machine learning training data, at least one machine learning classifier. In particular, as described above, a response message generally includes data and/or metadata corresponding to a request that resulted in the response. Hence, a message may include both "input" (e.g. the request) that used by the provider system 104 to generate a response, and "output" (e.g. the response) that was the result of the "input". Hence, a harmonized object may also generally include such "input" and "output", in a harmonized format, and may be used to train a given machine learning model. In particular, as will be described in more detail below, the machine learning training computing device 140 may include respective feature extractors for different machine learning models that are being trained, and the feature extractors may be configured to extract particular input and output from the harmonized objects which pertain to the functionality of a machine learning model. Put another way, the given machine learning training data may comprise input and output extracted from the messages, the input comprising data from a message corresponding to a response for the items provided by the one or more provider systems, and the output comprising respective data corresponding to a request that resulted in the response.

For example, for a machine learning model for categorizing a received provider object according to reusability, input and output pertaining to reusability may be extracted from the harmonized objects and used to train a reusability machine learning model. For example, machine learning classifiers for different reusability types of provider objects may be generated from the training.

In another example, for a machine learning model for categorizing a received provider object according to context characteristics, input and output pertaining to context characteristics may be extracted from the harmonized objects and used to train a context characteristic machine learning model. For example, machine learning classifiers for different context characteristic types of provider objects may be generated from the training.

In another example, for a machine learning model for combining two or more items of the received provider objects, input and output pertaining to combining two or more items may be extracted from the harmonized objects and used to train a context characteristic machine learning model. For example, machine learning classifiers for different combinations of items may be generated from the training.

In another example, for a machine learning model for determining a validity and/or criticality of a received provider object, input and output pertaining to validity and/or criticality may be extracted from the harmonized objects and used to train a criticality machine learning model. Machine learning classifiers for criticality and/or validity of different provider objects may be generated from the training.

At a block 410, the controller 320 and/or the computing device 140 provides the at least one machine learning classifier to the given machine learning model at a server (e.g. the caching server 121) configured to implement the given machine learning model on received provider objects. For example, the caching server 121 may use the machine learning classifiers generated for the different machine learning models when implementing the different machine learning models on received provider objects, as described in more detail below.

The block 406, the block 408 and the block 410 may be implemented periodically and/or in parallel with the block 402 and the block 404, such that machine learning classifiers are periodically generated and provided to the caching server 121.

Similarly, while aspects of the method 400 have been generally described with respect to one machine learning model, the method 400 may be implemented for a plurality of machine learning models. For example, the method 400 may further comprise the controller 320 and/or the computing device 140: extracting (e.g. at the block 406), from the harmonized objects, for a plurality of given machine learning models, given respective machine learning training data; generating (e.g. at the block 408), for the plurality of given machine learning models, using the given respective machine learning training data, at least one respective machine learning classifier; and providing (e.g. at the block 410), by the one or more computing devices, the at least one respective machine learning classifier to the plurality of given machine learning models at one or more servers (e.g. the caching server 121) configured to implement the plurality of given machine learning models on the received provider objects.

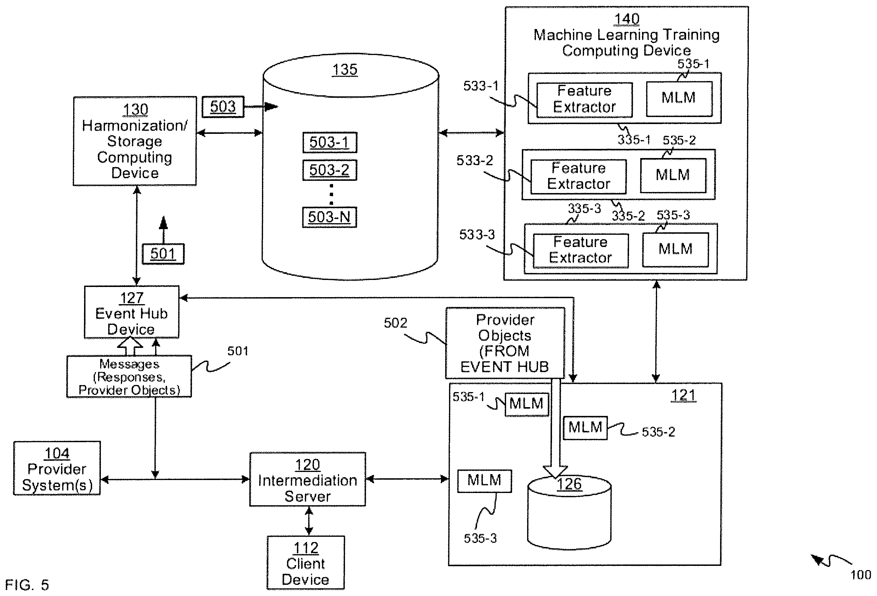

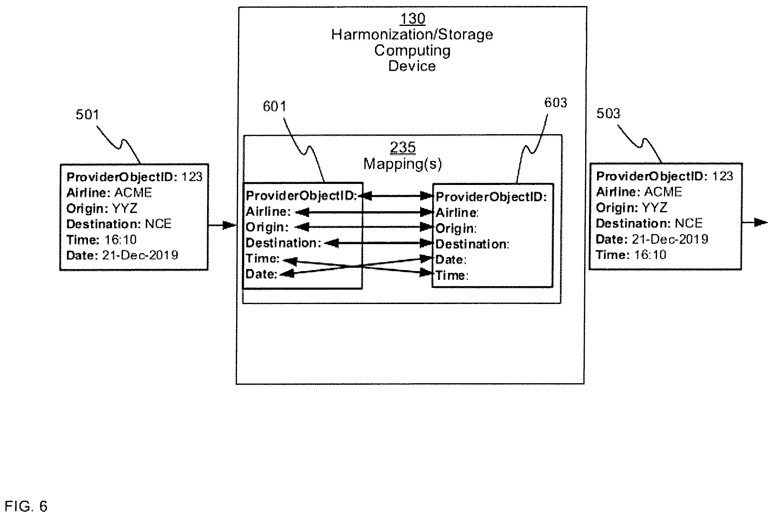

An example of the method 400 is next described. Attention is first directed to FIG. 5, which depicts the system 100, but without the network 116. Rather FIG. 5 shows communication links between the components of the system 100 which are represented as double ended-arrows therebetween; such communication links may include the network 116. Otherwise, FIG. 5 is similar to FIG. 1, with like components having like numbers. In particular, FIG. 5, together with FIG. 6, depicts an example of the block 402 and the block 404 of the method 400.

In FIG. 5, the event hub device 127 is receiving messages 501 which, as depicted, may include responses received from the provider system 104, and provider objects, and the like. The messages 501 may be received from any suitable source of in the system 100, as described above. The event hub device 127 transmits the messages 501 to the computing device 130. As depicted, the event hub device 127 further provides provider objects 502 of the messages 501 to the caching server 121. While the provider objects 502 are depicted as being different from the messages 501, the provider objects 502 may be received at the caching server 121 in the form of the messages 501.

The computing device 130 receives (e.g. at the block 402 of the method 400) the messages 501 and generates harmonized objects 503 from the messages 501 and the mappings 235. In some examples, the messages 501 and/or the harmonized objects 503 may be in an eXtensible Markup Language (XML) format, however the messages 501 and the harmonized objects 503 may be in any suitable respective format.

Attention is briefly directed to FIG. 6 which depicts an example of the computing device 130 receiving a message 501 and generating a harmonized object 503 from the message 501 using the mappings 235. In particular, a given mapping 235 is depicted that includes a mapping of fields 601 of a given message type (e.g. a provider object for a flight) to fields 603 of corresponding harmonized objects 503.

As depicted, the fields 601 of an example message 501 (e.g., that includes a provider object for a flight and corresponds to a response from the provider system 104), include a "ProviderObjectID" (e.g. a provider object identifier, for example as generated by the provided system 104), "Airline", "Origin", "Destination", "Time" and "Date". The depicted mapping 235 maps the field "Airline" of the fields 601, to the field "Airline" of the fields 603 of a corresponding harmonized object 503, as graphically represented by an arrow therebetween (different from the arrows of the communication links). Similar mappings of the other fields 601 to corresponding fields 603 are depicted. In particular, the fields "Date" and "Time" for each of the fields 601, 603 have different positions for the example messages 501 and the example harmonized objects 503; for example, in the harmonized objects 503, the positions of the fields "Date" and "Time" are reversed as compared to the message 501. While such an example is relatively simplistic, it is understood that the format differences between the messages 501 and the harmonized objects 503 may be much more complex. For example, dates, times, airline names, etc. may be in different formats, and the mapping 235 may include data for translating the message data into a common format of the harmonized object data. Furthermore, the message 501 generally includes data (e.g. which may also be in the field 601) from a request that resulted in the message 501.

Furthermore, when messages 501 are received that include provider objects in different formats, the mappings 235 may be used to generate corresponding harmonized objects 503 having a common format for provider objects.

Regardless, the message data from the messages 501 is used to populate corresponding fields of the harmonized objects 503, for a harmonized object type. Indeed, the computing device 130 may be further configured to determine a type of a message 501 and select a corresponding mapping 235 to generate a corresponding harmonized object 503. For example, the computing device 130 may be configured to categorize the messages 501 based on a format thereof and/or data of the messages 501 and select a mapping 235 accordingly.

Returning to FIG. 5, the computing device 130 stores (e.g. at the block 404 of the method 400) the harmonized objects 503 at the memory 135, for example on an on-going basis and/or as messages 501 are received and/or as harmonized objects 503 are generated.

As depicted, the memory 135 is storing a plurality of harmonized objects 503-1, 503-2...503-N (e.g. with "N" being an integer of any suitable value). While not depicted, the harmonized objects 503 may be stored according to type.

As depicted, the computing device 140 comprises a plurality of machine learning modules 335-1, 335-2, 335-3. While three modules 335 are depicted, the computing device 140 may store any suitable number of modules 335. In particular, the computing device 140 may store a module 335 for each machine learning model that is to be trained using the harmonized objects 503.

As depicted, each module 335 comprises a respective feature extractor 533-1, 533-2, 533-3 (interchangeably referred to hereafter, collectively, as the feature extractors 533 and, generically, as a feature extractor 533) and a given machine learning model 535-1, 535-2, 535-3 (interchangeably referred to hereafter, collectively, as the machine learning models 535 and, generically, as a machine learning model 535).

A given feature extractor 533 may be configured to extract given machine learning training data (e.g. "input" and "output") from the harmonized objects 503, for training a given machine learning model 535. For example, the harmonized objects 503 provide an overall training dataset for the machine learning models 535 (e.g. a harmonized object 503 may comprise a record with a plurality of fields that correspond to input and output for training the machine learning models 535). A given feature extractor 533 may extract features from the training dataset (e.g. specific fields which are converted to a format that can be used with a given machine learning model 535) depending on an objective and/or a functionality of the given machine learning model 535 being trained; such features are hence used to train a machine learning model 535.

The type of given machine learning training data that is extracted from the harmonized objects 503 by a given feature extractor 533 may generally depend on the functionality of the machine learning model 535 being trained. Examples of harmonized objects 503 and/or given machine learning training data that may be used as inputs and outputs used to train specific machine learning models 535 have been described above. However, any suitable harmonized objects 503 and/or given machine learning training data may be extracted by a given feature extractor 533 and used to train a machine learning model 535. Indeed, the harmonized objects 503 and/or given machine learning training data may be extracted by a given feature extractor 533, which may be preconfigured at the computing device 140 and/or at a module 335.

For example, as depicted, the machine learning models 535-1, 535-2 may be implemented at the caching server 121 to categorize the provider objects 502 being stored at the memory 126. In some examples, machine learning model 535-1 may be to categorize a received provider object 502 according to reusability; hence, for example, the machine learning model 535-1 may comprise a reusability determining machine learning model. In some examples, the machine learning model 535-2 may be to categorize a received provider object 502 according to context characteristics; hence, for example, the machine learning model 535-2 may comprise a context determining machine learning model. Regardless, the provider objects 502 are generally stored at the cache 126 as categorized, as described below.

The machine learning model 535-3 may be to determine a criticality of a received provider object 502 stored at the memory 126 (e.g. as categorized) when responding to a request for a provider object from the client device 112. For example, the machine learning model 535-3 may comprise a criticality determining machine learning model and, in particular, a validity estimation machine learning model configured to determine whether a provider object 502 is estimated to be currently valid. For example, the machine learning model 535-3 may be configured to determine that a current time does not exceed one or more of an estimated expiry time and an estimated TTL value of the provider object.

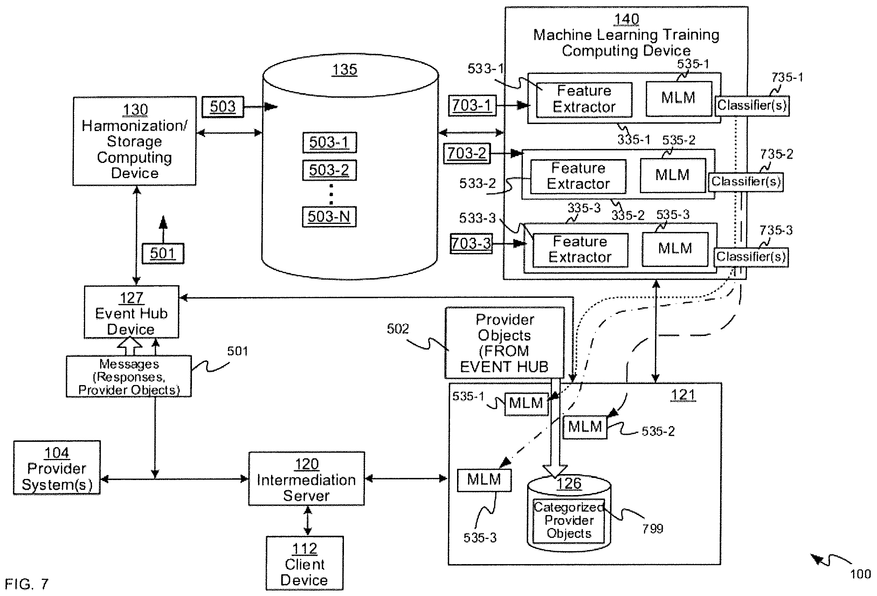

Attention is next directed to FIG. 7, which represents a depiction of the present invention. In particular, FIG. 7, depicts an example of the block 406, the block 408 and the block 410 of the method 400.

In FIG. 7, the computing device 140 is depicted as extracting (e.g. at the block 406 of the method 400, and for example using the feature extractors 533), from the harmonized objects 503 stored at the memory 135, for a given machine learning model 535, given machine learning training data 703-1, 703-2, 703-3 (interchangeably referred to hereafter, collectively, as machine learning training data 703 and, generically, as a set of machine learning training data 703). Each set of machine learning training data 703 includes a subset of the harmonized objects 503 stored at the memory 135 that is selected based on the functionality of the respective machine learning model 535 that is being trained by a particular module 335.

The respective sets of machine learning training data 703 are used by the modules 335 to train a respective machine learning model 535 to generate (e.g. at the block 408 of the method 400) one or more respective machine learning classifiers 735-1, 735-2, 735-3 (interchangeably referred to hereafter, collectively, as the machine learning classifiers 735 and, generically, as a machine learning classifier 735).

While FIG. 7 depicts one machine learning classifier 735 being generated by each of the modules 335, each module 335 may generate more than one machine learning classifier 735, for example for categorizing the provider objects 502 according to different categories. For example, when the machine learning model 535-1 is for categorizing the provider objects 502 according to reusability, a machine learning classifier 735-1 may be generated for a plurality of categories of reusability. Similarly, when the machine learning model 535-2 is for categorizing the provider objects 502 according to context characteristics, a machine learning classifier 735-1 may be generated for a plurality of categories of context characteristics.

As depicted, the computing device 140 provides (e.g. at the block 410 of the method 400) the machine learning classifiers 735 corresponding to respective given machine learning models 535 at the caching server 121. For example, the machine learning classifier 735-1 is provided to the machine learning model 535-1 at the caching server 121, the machine learning classifier 735-2 is provided to the machined learning model 535-2 at the caching server 121, and the machine learning classifier 735-3 is provided to the machine learning model 535-3 at the caching server 121 (e.g. the computing device 140 transmits the machine learning classifiers 735 to the caching server 121). The caching server 121 implements the given machine learning models 535 using the machine learning classifiers 735 on the received provider objects 502. For example, as depicted, the machine learning classifiers 735 are transmitted to the caching server 121 via communication links between the computing device 140 and the caching server 121. For clarity, the lines used to show transmission of the machine learning classifiers 735 to the caching server 121 are depicted differently (e.g. using different dashed styles).

As described above, the functionality of the one or more servers 120 is described in Applicant's co-pending application titled "DEVICE, SYSTEM AND METHOD FOR PROVIDING PROVIDER OBJECTS FROM A CACHE", having the filing number FR1911662. In particular, the one or more servers 120 may implement the machine learning models 535-1, 535-2 to categorize the provider objects 502 according to reusability and context characteristics, and store the provider objects in the memory 126, for example as categorized provider objects 799. The categorized provider objects 799 may later be used to respond to requests from the client device 112, by selecting categorized provider objects 799 stored at the memory 126 that meet criteria of a request, for example based at least in part on the categorization by the machine learning models 535-1, 535-2. The machine learning model 535-3 may be used to further categorize the categorized provider objects 799, stored at the memory 126, and that meet the criteria of a request, by criticality and/or validity when responding to the request. As the machine learning models 535 have been "trained" via the classifiers 735, the machine learning models 535 may be used to respond to a request by the client device 112 using the categorized provider objects 799 rather than request provider objects from the provider system 104, which may reduce time in responding to a request from the client device 112.

Categorizing provider objects as described above provides technical benefits in terms of request processing efficiency and response time when a request with similar characteristics and requesting a similar provider object as a previous request is received and to be responded on the basis of the cache. As the provider object has previously been stored as categorized according to reusability and/or context as opposed to storing the provider object without categorization, the provider object can be identified in and retrieved from the cache in a faster and more efficient manner than without categorization. To this end, the cache identifies the context characteristics of the request (such as the geographic origin of the request, e.g. France), and uses this information as an index into the cache, in order to minimize the processing resources to identify and retrieve the requested provider object from the cache. In this sense, the categorization of the provider objects constitutes a cache storage organization segmenting the cache into logical portions (categories) according to previously received request characteristics as described above, which is advantageous in term of request processing efficiency.

The invention employs a dynamic segmentation of the cache which tracks dynamic changes of request characteristics over time and adapts the data organization accordingy in an automated manner. These embodiments provide a mechanism to adapt the level of granularity of cache segmentation, by defining new categories by reusability/context characteristics of tracked incoming requests and/or provider objects, depending on a number of requests with similar or different context/reusability characteristics. Generally, dynamic segmentation of the cache refers to automatically generating and/or dissolving categories of categorized provider objects stored in the cache depending on the number of incoming requests and/or criteria associated with the incoming requests including one or more of a respective reusability and respective context characteristics of the provider object. Generating categories refers to categorizing provider objects according to new or a new combination of reusability/context characteristics, while dissolving categories refers to deleting provider objects stored as categorized according to particular reusability/context characteristics from the cache.

According to an example, if a request is received which is determined to be dissimilar from existing categories at least to a given extent, the caching server 121 generates a new category for this request and subsequent requests with similar characteristics. To this end, the caching server 121 determines a similarity score for an incoming request comparing the context/reusability characteristics of the request with the context/reusability characteristics of the existing categories.

In response to determining, based on the similarity score, that the request is substantially similar to an existing category, the request is processed and answered based on the provider objects stored as categorized in this substantially similar category. In response to determining, based on the similarity score, that the request is not substantially similar to an existing category, the caching server 121 creates a new category corresponding to the context/reusability characteristics of the request. The decision between substantially similar and dissimilar may be taken by using a threshold value of the similarity score. For example, if the similarity score for the received request is at or above the threshold value of the similarity score, it is determined that the request is substantially similar to an existing category. If, on the other hand, the similarity score for the received request is below the threshold value, it is determined that the request is dissimilar to the existing categories.

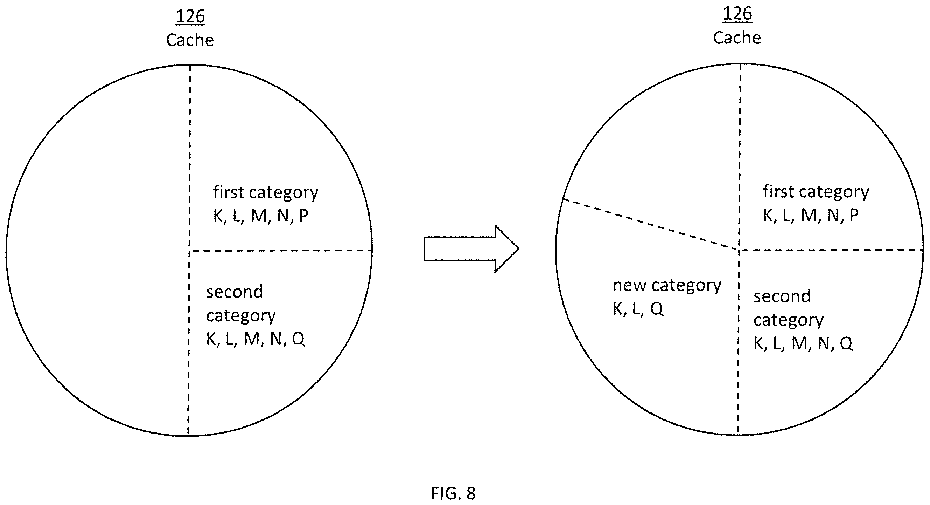

For example, a first number of provider objects have been categorized by way of five attributes K, L, M, N, P (first category) and a second number of provider objects have been categorized by way of five attributes K, L, M, N, Q (second category), and the cache 126 has been segmented into the corresponding categories or logical portions (see FIG. 8). An incoming first request indicating the attributes K, L, M, N, P is determined to have a similarity score of 100% for the first category and, hence, this first request is processed based on the first category (meaning that one or more provider objects stored as categorized in the first category are returned, optionally, if determined to be currently valid). An incoming second request indicating the attributes K, L, M, Q is determined to have a similarity score of 80% with the second category and, hence, this second request is processed using the second category. An incoming third request, however, indicates the attributes K, L, Q. This third request is determined to have a similarity score of 60% with the second category which is below an exemplary threshold value of 70%. Hence, the caching server 121 creates a new (third) category for the attributes K, L, Q by further segmenting the cache 126 into logical portions (FIG. 8). Provider objects having these context/reusability characteristics are categorized with these three attributes and stored in the new category (cache segment).

According to a further (additional or alternative) example, if more than a given upper threshold number of requests with similar characteristics are received within a given time period, the caching server 121 generates a new cache segment which is defined by one or more additional context and/or reusability characteristics and thus increases the granularity level of the segmentation. For example, a number of stored provider objects may have been previously categorized by way of two attributes. If more than a given threshold number of requests indicating these two attributes and additional attributes are received within a given threshold time period, the caching server 121 creates a new refined category including the two attributes and a third attribute. The provider objects being characterized by these three attributes are then also stored in the new category (i.e. categorized by these three attributes), while the other of the provider objects remain to be stored in the previously defined category.

Likewise, if the number of requests for a certain category is below a given lower threshold with a given time period (e.g. no requests at all for one day for a particular category), the caching server 121 may dissolve the corresponding category and all provider objects stored as categorized in this category are deleted from the cache. To cite an example, the caching server 121 may, after a while, eventually dissolve the previously created new category for the attributes K, L, Q if the number of corresponding subsequent requests has, after initial increasing and remaining constant for a while, finally decreased below a given lower threshold number within a given time period.

In embodiments, the aforementioned functionalities of dynamically segmenting the cache by automatically generating and/or dissolving categories depending on the number and/or characteristics of incoming requests is implemented by the reusability determining machine learning model 535 and a context determining machine learning model 535.

In these ways, the caching server 121 is arranged to automatically adapt the categories (cache segments) in response to the context/reusability characteristics and/or the number of requests with similar context/reusability characteristics. Consequently, the number and size of existing cache segments can be adequately maintained depending on varying numbers and characteristics of requests. This avoids, on the one hand, an over-fragmentation of the cache with too many categories storing duplicate provider objects, but serving too few requests in order to effectively contribute to the desired overall processing and response time efficiency. On the other hand, by automatically generating new categories in an on-demand manner (as explained above), the number of provider objects stored per category is kept at a reasonable level (i.e. not too many provider objects per category) so that identifying and retrieving provider objects on the basis of their categorization remains efficient.

In some embodiments, training the given machine learning model 535 also includes training the machine learning model 535 to automatically segment the cache in order to efficiently respond to requests based on the cache. To this end, training data may be extracted in response to receiving requests (messages) which is representative of context/reusability characteristics of provider objects in order to teach the machine learning model 535 how to dynamically categorize provider data objects and store categorized provider objects in the cache. Training the machine learning model 535 in this respect may also take into account a recent history of received requests (e.g. number of received request referring to similar characteristics as set out above) as well as a current categorization status of the cache (higher or lower degree of segmenation), both of which are factors for generating a new category and/or dissolving an existing category.

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

Persons skilled in the art will appreciate that in some examples, the functionality of devices and/or methods and/or processes described herein can be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that the scope of the invention is defined in the appended claims.

## Claims

1. A method for training machine learning models using messages associated with provider objects and for responding to a request from a client device (112), the method comprising:
receiving, at one or more computing devices (130), messages associated with provider objects representing items provided by one or more provider systems (104), the messages having more than one format;
storing, at one or more memories (222), harmonized objects corresponding to the messages, the harmonized objects generated using one or more mappings of harmonized data of the harmonized objects to message data of the messages, the harmonized objects having common formats for a harmonized object type, the method being **characterized in that** it further comprises the steps of:
extracting, at the one or more computing devices, from the harmonized objects, for a given machine learning model, given machine learning training data;
generating, at the one or more computing devices (130), for the given machine learning model, using the given machine learning training data, at least one machine learning classifier (735); providing, by the one or more computing devices (130), the at least one machine learning classifier (735) to the given machine learning model at a caching server (121) configured to implement the given machine learning model using the at least one machine learning classifier (735) on received provider objects;
wherein the given machine learning model uses the at least one machine learning classifier (735) to dynamically categorize a plurality of provider objects by one or more of reusability and context characteristics, comprising:
categorizing a first number of provider objects into a first category defined by first reusability and context characteristics;
in response to receiving a number of further requests for provider objects with second reusability and context characteristics substantially different from the first reusability and context characteristics, automatically categorizing a second number of provider objects with the second reusability and context characteristics and storing the second number of provider objects as categorized, thereby generating a new second category;
in response to receiving a number of further requests indicating a subset of the first reusability and context characteristics, automatically categorizing provider objects with the subset of the first reusability and context characteristics and storing the provider objects with the subset of the first reusability and context characteristics as categorized, thereby generating a new third category; and
responding to the request by the client device (112) using the categorized provider objects.

2. The method of claim 1, wherein, for the given machine learning model, given harmonized data of the harmonized objects is identified as the given machine learning training data.

3. The method of claim 1 or claim 2, wherein the given machine learning training data comprises input and output extracted from the messages, the input comprising data from a message corresponding to a response for the items provided by the one or more provider systems (104), and the output comprising respective data corresponding to a request that resulted in the response.

4. The method of any one of claims 1 to 3, further comprising:
extracting, at the one or more computing devices (130), from the harmonized objects, for a plurality of given machine learning models, given respective machine learning training data;
generating, at the one or more computing devices (130), for the plurality of given machine learning models, using the given respective machine learning training data, at least one respective machine learning classifier; and
providing, by the one or more computing devices (130), the at least one respective machine learning classifier to the plurality of given machine learning models at one or more servers configured to implement the plurality of given machine learning models on the received provider objects.

5. The method of any of any one of claims 1 to 4, wherein the given machine learning model is for one or more of:
categorizing a received provider object according to reusability;
categorizing the received provider object according to context characteristics;
determining a criticality of a received provider object; and
combining two or more items of the received provider objects.

6. The method of any one of claims 1 to 5, wherein the messages are received from an event hub device comprising a proxy for at least a server configured to respond to requests for the items provided by the one or more provider systems.

7. A computing device (130) for training machine learning models using messages associated with provider objects and for responding to a request from a client device (112), the computing device (130) comprising:
one or more memories (222);
a communication interface (228); and
a controller (220) configured to:
receive, via the communication interface (228), messages associated with provider objects representing items provided by one or more provider systems (104), the messages having more than one format;
store, at the one or more memories (222), harmonized objects corresponding to the messages, the harmonized objects generated using one or more mappings of harmonized data of the harmonized objects to message data of the messages, the harmonized objects having common formats for a harmonized object type, the computing device being **characterised in that** it executes the following steps:
extract, from the harmonized objects, for a given machine learning model, given machine learning training data;
generate, for the given machine learning model, using the given machine learning training data, at least one machine learning classifier; and
provide, via the communication interface (228), the at least one machine learning classifier to the given machine learning model at one or more caching servers (121) configured to implement the given machine learning model using the at least one machine learning classifier (735) on received provider objects
wherein the given machine learning model uses the machine learning classifier (735) for categorizing a plurality of provider objects by one or more of reusability and context characteristics, comprising:
categorizing a first number of provider objects into a first category defined by first reusability and context characteristics;
in response to receiving a number of further requests for provider objects with second reusability and context characteristics substantially different from the first reusability and context characteristics, automatically categorizing a second number of provider objects with the second reusability and context characteristics and storing the second number of provider objects as categorized, thereby generating a new second category;
in response to receiving a number of further requests indicating a subset of the first reusability and context characteristics, automatically categorizing provider objects with the subset of the first reusability and context characteristics and storing the provider objects with the subset of the first reusability and context characteristics as categorized, thereby generating a new third category; and
responding to the request by the client device (112) using the categorized provider objects.

8. The computing device of claim 7, wherein, for the given machine learning model, given harmonized data of the harmonized objects is identified as the given machine learning training data.

9. The computing device of claim 7 or claim 8, wherein the given machine learning training data comprises input and output extracted from the messages, the input comprising data from a message corresponding to a response for the items provided by the one or more provider systems, and the output comprising respective data corresponding to a request that resulted in the response.

10. The computing device of any one of claims 7 to 9, wherein the controller is further configured to:
extract, from the harmonized objects, for a plurality of given machine learning models, given respective machine learning training data;
generate, for the plurality of given machine learning models, using the given respective machine learning training data, at least one respective machine learning classifier; and
provide, via the communication interface, the at least one respective machine learning classifier to the plurality of given machine learning models at one or more servers configured to implement the plurality of given machine learning models on the received provider objects.

11. The computing device of any one of claims 7 to 10, wherein the given machine learning model is for one or more of:
categorizing a received provider object according to reusability;
categorizing the received provider object according to context characteristics;
determining a criticality of a received provider object; and
combining two or more items of the received provider objects.

12. The computing device of claim 11, wherein the given machine learning model is for categorizing a plurality of provider objects by one or more of reusability and context characteristics, comprising:
categorizing a first number of provider objects into a first category defined by first reusability and context characteristics;
in response to receiving a number of further requests for provider objects with second reusability and context characteristics substantially different from the first reusability and context characteristics, automatically categorizing a second number of provider objects with the second reusability and context characteristics and storing the second number of provider objects as categorized, thereby generating a new second category.

13. The computing device of claim 12, wherein categorizing the plurality of provider objects by one or more of reusability and context characteristics comprises:
in response to receiving a number of further requests indicating a subset of the first reusability and context characteristics, automatically categorizing provider objects with the subset of the first reusability and context characteristics and storing the provider objects with the subset of the first reusability and context characteristics as categorized, thereby generating a new third category.

14. The computing device of any one of claims 7 to 13, wherein the messages are received from an event hub device comprising a proxy for at least a server configured to respond to requests for the items provided by the one or more provider systems.

15. A computer program product comprising program code instructions stored on a computer readable medium to execute the method steps according any one of claims 1 to 6 when said program is executed on a computer.

## Patentansprüche

1. Verfahren zum Trainieren von maschinellen Lernmodellen unter Verwendung von Nachrichten, die mit Anbieterobjekten assoziiert sind, und zum Beantworten einer Anfrage von einem Client-Gerät (112), wobei das Verfahren umfasst:
Empfangen, an einem oder mehreren Rechengeräten (130), von Nachrichten, die mit Anbieterobjekten assoziiert sind, welche Gegenstände repräsentieren, die von einem oder mehreren Anbietersystemen (104) bereitgestellt werden, wobei die Nachrichten mehr als ein Format aufweisen; Speichern, an einem oder mehreren Speichern (222), von harmonisierten Objekten, die den Nachrichten entsprechen, wobei die harmonisierten Objekte unter Verwendung einer oder mehrerer Abbildungen von harmonisierten Daten der harmonisierten Objekte auf Nachrichtendaten der Nachrichten erzeugt werden, wobei die harmonisierten Objekte gemeinsame Formate für einen harmonisierten Objekttyp aufweisen, wobei das Verfahren **dadurch gekennzeichnet ist, dass** es ferner die Schritte umfasst:
Extrahieren, an dem einen oder mehreren Rechengeräten, von gegebenen Trainingsdaten für maschinelles Lernen aus den harmonisierten Objekten für ein gegebenes maschinelles Lernmodell;
Erzeugen, an dem einen oder mehreren Rechengeräten (130), von mindestens einem maschinellen Lernklassifikator (735) für das gegebene maschinelle Lernmodell unter Verwendung der gegebenen Trainingsdaten für maschinelles Lernen;
Bereitstellen, durch das eine oder die mehreren Rechengeräte (130), des mindestens einen maschinellen Lernklassifikators (735) für das gegebene maschinelle Lernmodell an einen Caching-Server (121), der eingerichtet ist, das gegebene maschinelle Lernmodell unter Verwendung des mindestens einen maschinellen Lernklassifikators (735) auf empfangenen Anbieterobjekten zu implementieren;
wobei das gegebene maschinelle Lernmodell den mindestens einen maschinellen Lernklassifikator (735) verwendet, um mehrere Anbieterobjekte dynamisch nach Wiederverwendbarkeit und Kontextmerkmalen zu kategorisieren, umfassend:
Kategorisieren einer ersten Anzahl von Anbieterobjekten in eine erste Kategorie, die durch erste Wiederverwendbarkeits- und Kontextmerkmale definiert ist;
als Antwort auf den Empfang einer Anzahl weiterer Anfragen für Anbieterobjekte mit zweiten Wiederverwendbarkeits- und Kontextmerkmalen, die sich wesentlich von den ersten Wiederverwendbarkeits- und Kontextmerkmalen unterscheiden, automatisches Kategorisieren einer zweiten Anzahl von Anbieterobjekten mit den zweiten Wiederverwendbarkeits- und Kontextmerkmalen und Speichern der zweiten Anzahl von Anbieterobjekten als kategorisiert, wodurch eine neue zweite Kategorie erzeugt wird;
als Antwort auf den Empfang einer Anzahl weiterer Anfragen, die eine Teilmenge der ersten Wiederverwendbarkeits- und Kontextmerkmale anzeigen, automatisches Kategorisieren von Anbieterobjekten mit der Teilmenge der ersten Wiederverwendbarkeits- und Kontextmerkmale und Speichern der Anbieterobjekte mit der Teilmenge der ersten Wiederverwendbarkeits- und Kontextmerkmale als kategorisiert, wodurch eine neue dritte Kategorie erzeugt wird; und
Beantworten der Anfrage durch das Client-Gerät (112) unter Verwendung der kategorisierten Anbieterobjekte.

2. Verfahren nach Anspruch 1, wobei für das gegebene maschinelle Lernmodell gegebene harmonisierte Daten der harmonisierten Objekte als die gegebenen Trainingsdaten für maschinelles Lernen identifiziert werden.

3. Verfahren nach Anspruch 1 oder 2, wobei die gegebenen Trainingsdaten für maschinelles Lernen Eingaben und Ausgaben umfassen, die aus den Nachrichten extrahiert werden, wobei die Eingabe Daten aus einer Nachricht umfasst, die einer Antwort für die von den einen oder mehreren Anbietersystemen (104) bereitgestellten Gegenstände entspricht, und die Ausgabe jeweilige Daten umfasst, die einer Anfrage entsprechen, die zu der Antwort geführt hat.

4. Verfahren nach einem der Ansprüche 1 bis 3, ferner umfassend:
Extrahieren, an dem einen oder mehreren Rechengeräten (130), von jeweiligen gegebenen Trainingsdaten für maschinelles Lernen aus den harmonisierten Objekten für mehrere gegebene maschinelle Lernmodelle;
Erzeugen, an dem einen oder mehreren Rechengeräten (130), von mindestens einem jeweiligen maschinellen Lernklassifikator für die mehreren gegebenen maschinellen Lernmodelle unter Verwendung der jeweiligen gegebenen Trainingsdaten für maschinelles Lernen; und
Bereitstellen, durch das eine oder die mehreren Rechengeräte (130), des mindestens einen jeweiligen maschinellen Lernklassifikators für die mehreren gegebenen maschinellen Lernmodelle an einen oder mehrere Server, die eingerichtet sind, die mehreren gegebenen maschinellen Lernmodelle auf den empfangenen Anbieterobjekten zu implementieren.

5. Verfahren nach einem der Ansprüche 1 bis 4, wobei das gegebene maschinelle Lernmodell verwendet wird zum:
Kategorisieren eines empfangenen Anbieterobjekts nach Wiederverwendbarkeit;
Kategorisieren des empfangenen Anbieterobjekts nach Kontextmerkmalen;
Bestimmen einer Kritikalität eines empfangenen Anbieterobjekts; und/oder Kombinieren von zwei oder mehr Gegenständen der empfangenen Anbieterobjekte.

6. Verfahren nach einem der Ansprüche 1 bis 5, wobei die Nachrichten von einem Event-Hub-Gerät empfangen werden, das einen Proxy für mindestens einen Server umfasst, der eingerichtet ist, auf Anfragen für die von den einen oder mehreren Anbietersystemen bereitgestellten Gegenstände zu antworten.

7. Rechengerät (130) zum Trainieren von maschinellen Lernmodellen unter Verwendung von Nachrichten, die mit Anbieterobjekten assoziiert sind, und zum Beantworten einer Anfrage von einem Client-Gerät (112), wobei das Rechengerät (130) umfasst:
einen oder mehrere Speicher (222);
eine Kommunikationsschnittstelle (228); und
einen Controller (220), der eingerichtet ist, um:
über die Kommunikationsschnittstelle (228) Nachrichten zu empfangen, die mit Anbieterobjekten assoziiert sind, welche Gegenstände repräsentieren, die von einem oder mehreren Anbietersystemen (104) bereitgestellt werden, wobei die Nachrichten mehr als ein Format aufweisen;
an den einen oder mehreren Speichern (222) harmonisierte Objekte zu speichern, die den Nachrichten entsprechen, wobei die harmonisierten Objekte unter Verwendung einer oder mehrerer Abbildungen von harmonisierten Daten der harmonisierten Objekte auf Nachrichtendaten der Nachrichten erzeugt werden, wobei die harmonisierten Objekte gemeinsame Formate für einen harmonisierten Objekttyp aufweisen, wobei das Rechengerät **dadurch gekennzeichnet ist, dass** es die folgenden Schritte ausführt:
Extrahieren von gegebenen Trainingsdaten für maschinelles Lernen, aus den harmonisierten Objekten, für ein gegebenes maschinelles Lernmodell;
Erzeugen von mindestens einem maschinellen Lernklassifikator für das gegebene maschinelle Lernmodell, unter Verwendung der gegebenen Trainingsdaten für maschinelles Lernen; und
Bereitstellen, über die Kommunikationsschnittstelle (228), des mindestens einen maschinellen Lernklassifikators für das gegebene maschinelle Lernmodell an einen oder mehrere Caching-Server (121), die eingerichtet sind, das gegebene maschinelle Lernmodell unter Verwendung des mindestens einen maschinellen Lernklassifikators (735) auf empfangenen Anbieterobjekten zu implementieren,
wobei das gegebene maschinelle Lernmodell den maschinellen Lernklassifikator (735) zum Kategorisieren mehrerer Anbieterobjekte nach Wiederverwendbarkeit und Kontextmerkmalen verwendet, umfassend:
Kategorisieren einer ersten Anzahl von Anbieterobjekten in eine erste Kategorie, die durch erste Wiederverwendbarkeits- und Kontextmerkmale definiert ist;
als Antwort auf den Empfang einer Anzahl weiterer Anfragen für Anbieterobjekte mit zweiten Wiederverwendbarkeits- und Kontextmerkmalen, die sich wesentlich von den ersten Wiederverwendbarkeits- und Kontextmerkmalen unterscheiden, automatisches Kategorisieren einer zweiten Anzahl von Anbieterobjekten mit den zweiten Wiederverwendbarkeits- und Kontextmerkmalen und Speichern der zweiten Anzahl von Anbieterobjekten als kategorisiert, wodurch eine neue zweite Kategorie erzeugt wird;
als Antwort auf den Empfang einer Anzahl weiterer Anfragen, die eine Teilmenge der ersten Wiederverwendbarkeits- und Kontextmerkmale anzeigen, automatisches Kategorisieren von Anbieterobjekten mit der Teilmenge der ersten Wiederverwendbarkeits- und Kontextmerkmale und Speichern der Anbieterobjekte mit der Teilmenge der ersten Wiederverwendbarkeits- und Kontextmerkmale als kategorisiert, wodurch eine neue dritte Kategorie erzeugt wird; und
Beantworten der Anfrage durch das Client-Gerät (112) unter Verwendung der kategorisierten Anbieterobjekte.

8. Rechengerät nach Anspruch 7, wobei für das gegebene maschinelle Lernmodell gegebene harmonisierte Daten der harmonisierten Objekte als die gegebenen Trainingsdaten für maschinelles Lernen identifiziert werden.

9. Rechengerät nach Anspruch 7 oder 8, wobei die gegebenen Trainingsdaten für maschinelles Lernen Eingaben und Ausgaben umfassen, die aus den Nachrichten extrahiert werden, wobei die Eingabe Daten aus einer Nachricht umfasst, die einer Antwort für die von den einen oder mehreren Anbietersystemen bereitgestellten Gegenstände entspricht, und die Ausgabe jeweilige Daten umfasst, die einer Anfrage entsprechen, die zu der Antwort geführt hat.

10. Rechengerät nach einem der Ansprüche 7 bis 9, wobei der Controller ferner eingerichtet ist, um:
jeweilige gegebene Trainingsdaten für maschinelles Lernen aus den harmonisierten Objekten, für mehrere gegebene maschinelle Lernmodelle zu extrahieren;
mindestens einen jeweiligen maschinellen Lernklassifikator für die mehreren gegebenen maschinellen Lernmodelle, unter Verwendung der jeweiligen gegebenen Trainingsdaten für maschinelles Lernen zu erzeugen; und
über die Kommunikationsschnittstelle den mindestens einen jeweiligen maschinellen Lernklassifikator für die mehreren gegebenen maschinellen Lernmodelle an einen oder mehrere Server bereitzustellen, die eingerichtet sind, die mehreren gegebenen maschinellen Lernmodelle auf den empfangenen Anbieterobjekten zu implementieren.

11. Rechengerät nach einem der Ansprüche 7 bis 10, wobei das gegebene maschinelle Lernmodell verwendet wird zum:
Kategorisieren eines empfangenen Anbieterobjekts nach Wiederverwendbarkeit;
Kategorisieren des empfangenen Anbieterobjekts nach Kontextmerkmalen;
Bestimmen einer Kritikalität eines empfangenen Anbieterobjekts; und/oder
Kombinieren von zwei oder mehr Gegenständen der empfangenen Anbieterobjekte.

12. Rechengerät nach Anspruch 11, wobei das gegebene maschinelle Lernmodell zum Kategorisieren mehrerer Anbieterobjekte nach Wiederverwendbarkeit und Kontextmerkmalen verwendet wird, umfassend:
Kategorisieren einer ersten Anzahl von Anbieterobjekten in eine erste Kategorie, die durch erste Wiederverwendbarkeits- und Kontextmerkmale definiert ist;
als Antwort auf den Empfang einer Anzahl weiterer Anfragen für Anbieterobjekte mit zweiten Wiederverwendbarkeits- und Kontextmerkmalen, die sich wesentlich von den ersten Wiederverwendbarkeits- und Kontextmerkmalen unterscheiden, automatisches Kategorisieren einer zweiten Anzahl von Anbieterobjekten mit den zweiten Wiederverwendbarkeits- und Kontextmerkmalen und Speichern der zweiten Anzahl von Anbieterobjekten als kategorisiert, wodurch eine neue zweite Kategorie erzeugt wird.

13. Rechengerät nach Anspruch 12, wobei das Kategorisieren der mehreren von Anbieterobjekten nach Wiederverwendbarkeit und Kontextmerkmalen Folgendes umfasst:
als Antwort auf den Empfang einer Anzahl weiterer Anfragen, die eine Teilmenge der ersten Wiederverwendbarkeits- und Kontextmerkmale anzeigen, automatisches Kategorisieren von Anbieterobjekten mit der Teilmenge der ersten Wiederverwendbarkeits- und
Kontextmerkmale und Speichern der Anbieterobjekte mit der Teilmenge der ersten Wiederverwendbarkeits- und Kontextmerkmale als kategorisiert, wodurch eine neue dritte Kategorie erzeugt wird.

14. Rechengerät nach einem der Ansprüche 7 bis 13, wobei die Nachrichten von einem Event-Hub-Gerät empfangen werden, das einen Proxy für mindestens einen Server umfasst, der eingerichtet ist, auf Anfragen für die von den einen oder mehreren Anbietersystemen bereitgestellten Gegenstände zu antworten.

15. Computerprogrammprodukt, das Programmcodes enthält, die auf einem computerlesbaren Medium gespeichert sind, um die Verfahrensschritte nach einem der Ansprüche 1 bis 6 auszuführen, wenn das Programm auf einem Computer ausgeführt wird.

## Revendications

1. Méthode d'entraînement de modèles d'apprentissage automatique à l'aide de messages associés à des objets de fournisseur et de réponse à une demande provenant d'un dispositif client (112), la méthode comprenant :
la réception, au niveau d'un ou plusieurs dispositifs informatiques (130), de messages associés à des objets de fournisseur représentant des éléments fournis par un ou plusieurs systèmes fournisseurs (104), les messages ayant plus d'un format ;
le stockage, au niveau d'une ou plusieurs mémoires (222), d'objets harmonisés correspondant aux messages, les objets harmonisés étant générés à l'aide d'une ou plusieurs mises en correspondance de données harmonisées des objets harmonisés avec des données de message des messages, les objets harmonisés ayant des formats communs pour un type d'objet harmonisé, la méthode étant **caractérisée en ce qu'**elle comprend en outre les étapes suivantes :
l'extraction, au niveau des un ou plusieurs dispositifs informatiques, à partir des objets harmonisés, pour un modèle d'apprentissage automatique donné, de données d'entraînement d'apprentissage automatique données ;
la génération, au niveau des un ou plusieurs dispositifs informatiques (130), pour le modèle d'apprentissage automatique donné, à l'aide des données d'entraînement d'apprentissage automatique données, d'au moins un classificateur d'apprentissage automatique (735) ;
la fourniture, par les un ou plusieurs dispositifs informatiques (130), de l'au moins un classificateur d'apprentissage automatique (735) au modèle d'apprentissage automatique donné au niveau d'un serveur de mise en cache (121) configuré pour implémenter le modèle d'apprentissage automatique donné à l'aide de l'au moins un classificateur d'apprentissage automatique (735) sur des objets de fournisseur reçus ;
dans laquelle le modèle d'apprentissage automatique donné utilise l'au moins un classificateur d'apprentissage automatique (735) pour catégoriser dynamiquement une pluralité d'objets de fournisseur selon une ou plusieurs caractéristiques de réutilisabilité et de contexte, comprenant :
la catégorisation d'un premier nombre d'objets de fournisseur dans une première catégorie définie par de premières caractéristiques de réutilisabilité et de contexte ;
en réponse à la réception d'un certain nombre de demandes supplémentaires pour des objets de fournisseur avec de deuxièmes caractéristiques de réutilisabilité et de contexte sensiblement différentes des premières caractéristiques de réutilisabilité et de contexte, la catégorisation automatique d'un deuxième nombre d'objets de fournisseur avec les deuxièmes caractéristiques de réutilisabilité et de contexte et le stockage du deuxième nombre d'objets de fournisseur comme catégorisés, générant ainsi une nouvelle deuxième catégorie ;
en réponse à la réception d'un certain nombre de demandes supplémentaires indiquant un sous-ensemble des premières caractéristiques de réutilisabilité et de contexte, la catégorisation automatique des objets de fournisseur avec le sous-ensemble des premières caractéristiques de réutilisabilité et de contexte et le stockage des objets de fournisseur avec le sous-ensemble des premières caractéristiques de réutilisabilité et de contexte comme catégorisés, générant ainsi une nouvelle troisième catégorie ; et
la réponse à la demande provenant du dispositif client (112) à l'aide des objets de fournisseur catégorisés.

2. Méthode selon la revendication 1, dans laquelle, pour le modèle d'apprentissage automatique donné, des données harmonisées données des objets harmonisés sont identifiées comme étant les données d'entraînement d'apprentissage automatique données.

3. Méthode selon la revendication 1 ou la revendication 2, dans laquelle les données d'entraînement d'apprentissage automatique données comprennent une entrée et une sortie extraites des messages, l'entrée comprenant des données d'un message correspondant à une réponse pour les éléments fournis par les un ou plusieurs systèmes fournisseurs (104), et la sortie comprenant des données respectives correspondant à une demande qui a entraîné la réponse.

4. Méthode selon l'une quelconque des revendications 1 à 3, comprenant en outre :
l'extraction, au niveau des un ou plusieurs dispositifs informatiques (130), à partir des objets harmonisés, pour une pluralité de modèles d'apprentissage automatique donnés, de données d'entraînement d'apprentissage automatique respectives données ;
la génération, au niveau des un ou plusieurs dispositifs informatiques (130), pour la pluralité de modèles d'apprentissage automatique donnés, à l'aide des données d'entraînement d'apprentissage automatique respectives données, d'au moins un classificateur d'apprentissage automatique respectif ; et
la fourniture, par les un ou plusieurs dispositifs informatiques (130), de l'au moins un classificateur d'apprentissage automatique respectif à la pluralité de modèles d'apprentissage automatique donnés au niveau d'un ou plusieurs serveurs configurés pour implémenter la pluralité de modèles d'apprentissage automatique donnés sur les objets de fournisseur reçus.

5. Méthode selon l'une quelconque des revendications 1 à 4, dans laquelle le modèle d'apprentissage automatique donné est destiné à une ou plusieurs parmi :
la catégorisation d'un objet de fournisseur reçu selon la réutilisabilité ;
la catégorisation de l'objet de fournisseur reçu selon des caractéristiques de contexte ;
la détermination d'une criticité d'un objet de fournisseur reçu ; et
la combinaison de deux éléments ou plus des objets de fournisseur reçus.

6. Méthode selon l'une quelconque des revendications 1 à 5, dans laquelle les messages sont reçus en provenance d'un dispositif concentrateur d'événements comprenant un proxy pour au moins un serveur configuré pour répondre à des demandes pour les éléments fournis par les un ou plusieurs systèmes fournisseurs.

7. Dispositif informatique (130) d'entraînement de modèles d'apprentissage automatique à l'aide de messages associés à des objets de fournisseur et de réponse à une demande provenant d'un dispositif client (112), le dispositif informatique (130) comprenant :
une ou plusieurs mémoires (222) ;
une interface de communication (228) ; et
un contrôleur (220) configuré pour :
recevoir, via l'interface de communication (228), des messages associés à des objets de fournisseur représentant des éléments fournis par un ou plusieurs systèmes fournisseurs (104), les messages ayant plus d'un format ;
stocker, au niveau d'une ou plusieurs mémoires (222), des objets harmonisés correspondant aux messages, les objets harmonisés étant générés à l'aide d'une ou plusieurs mises en correspondance de données harmonisées des objets harmonisés avec des données de message des messages, les objets harmonisés ayant des formats communs pour un type d'objet harmonisé, le dispositif informatique étant **caractérisé en ce qu'**il exécute les étapes suivantes :
l'extraction, à partir des objets harmonisés, pour un modèle d'apprentissage automatique donné, de données d'entraînement d'apprentissage automatique données ;
la génération, pour le modèle d'apprentissage automatique donné, à l'aide des données d'entraînement d'apprentissage automatique données, d'au moins un classificateur d'apprentissage automatique ; et
la fourniture, via l'interface de communication (228), de l'au moins un classificateur d'apprentissage automatique au modèle d'apprentissage automatique donné au niveau d'un ou plusieurs serveurs de mise en cache (121) configurés pour implémenter le modèle d'apprentissage automatique donné à l'aide de l'au moins un classificateur d'apprentissage automatique (735) sur des objets de fournisseur reçus
dans lequel le modèle d'apprentissage automatique donné utilise le classificateur d'apprentissage automatique (735) pour catégoriser une pluralité d'objets de fournisseur selon une ou plusieurs caractéristiques de réutilisabilité et de contexte, comprenant :
la catégorisation d'un premier nombre d'objets de fournisseur dans une première catégorie définie par de premières caractéristiques de réutilisabilité et de contexte ;
en réponse à la réception d'un certain nombre de demandes supplémentaires pour des objets de fournisseur avec de deuxièmes caractéristiques de réutilisabilité et de contexte sensiblement différentes des premières caractéristiques de réutilisabilité et de contexte, la catégorisation automatique d'un deuxième nombre d'objets de fournisseur avec les deuxièmes caractéristiques de réutilisabilité et de contexte et le stockage du deuxième nombre d'objets de fournisseur comme catégorisés, générant ainsi une nouvelle deuxième catégorie ;
en réponse à la réception d'un certain nombre de demandes supplémentaires indiquant un sous-ensemble des premières caractéristiques de réutilisabilité et de contexte, la catégorisation automatique des objets de fournisseur avec le sous-ensemble des premières caractéristiques de réutilisabilité et de contexte et le stockage des objets de fournisseur avec le sous-ensemble des premières caractéristiques de réutilisabilité et de contexte comme catégorisés, générant ainsi une nouvelle troisième catégorie ; et
la réponse à la demande provenant du dispositif client (112) à l'aide des objets de fournisseur catégorisés.

8. Dispositif informatique selon la revendication 7, dans lequel, pour le modèle d'apprentissage automatique donné, des données harmonisées données des objets harmonisés sont identifiées comme étant les données d'entraînement d'apprentissage automatique données.

9. Dispositif informatique selon la revendication 7 ou la revendication 8, dans lequel les données d'entraînement d'apprentissage automatique données comprennent une entrée et une sortie extraites des messages, l'entrée comprenant des données d'un message correspondant à une réponse pour les éléments fournis par les un ou plusieurs systèmes fournisseurs, et la sortie comprenant des données respectives correspondant à une demande qui a entraîné la réponse.

10. Dispositif informatique selon l'une quelconque des revendications 7 à 9, dans lequel le contrôleur est en outre configuré pour :
extraire, à partir des objets harmonisés, pour une pluralité de modèles d'apprentissage automatique donnés, des données d'entraînement d'apprentissage automatique respectives données ;
générer, pour la pluralité de modèles d'apprentissage automatique donnés, à l'aide des données d'entraînement d'apprentissage automatique respectives données, au moins un classificateur d'apprentissage automatique respectif ; et
fournir, via l'interface de communication, l'au moins un classificateur d'apprentissage automatique respectif à la pluralité de modèles d'apprentissage automatique donnés au niveau d'un ou plusieurs serveurs configurés pour implémenter la pluralité de modèles d'apprentissage automatique donnés sur les objets de fournisseur reçus.

11. Dispositif informatique selon l'une quelconque des revendications 7 à 10, dans lequel le modèle d'apprentissage automatique donné est destiné à une ou plusieurs parmi :
la catégorisation d'un objet de fournisseur reçu selon la réutilisabilité ;
la catégorisation de l'objet de fournisseur reçu selon des caractéristiques de contexte ;
la détermination d'une criticité d'un objet de fournisseur reçu ; et
la combinaison de deux éléments ou plus des objets de fournisseur reçus.

12. Dispositif informatique selon la revendication 11, dans lequel le modèle d'apprentissage automatique donné est destiné à catégoriser une pluralité d'objets de fournisseur selon une ou plusieurs caractéristiques de réutilisabilité et de contexte, comprenant :
la catégorisation d'un premier nombre d'objets de fournisseur dans une première catégorie définie par de premières caractéristiques de réutilisabilité et de contexte ;
en réponse à la réception d'un certain nombre de demandes supplémentaires pour des objets de fournisseur avec de deuxièmes caractéristiques de réutilisabilité et de contexte sensiblement différentes des premières caractéristiques de réutilisabilité et de contexte, la catégorisation automatique d'un deuxième nombre d'objets de fournisseur avec les deuxièmes caractéristiques de réutilisabilité et de contexte et le stockage du deuxième nombre d'objets de fournisseur comme catégorisés, générant ainsi une nouvelle deuxième catégorie.

13. Dispositif informatique selon la revendication 12, dans lequel la catégorisation de la pluralité d'objets de fournisseur selon une ou plusieurs caractéristiques de réutilisabilité et de contexte comprend :
en réponse à la réception d'un certain nombre de demandes supplémentaires indiquant un sous-ensemble des premières caractéristiques de réutilisabilité et de contexte, la catégorisation automatique des objets de fournisseur avec le sous-ensemble des premières caractéristiques de réutilisabilité et de contexte et le stockage des objets de fournisseur avec le sous-ensemble des premières caractéristiques de réutilisabilité et de contexte comme catégorisés, générant ainsi une nouvelle troisième catégorie.

14. Dispositif informatique selon l'une quelconque des revendications 7 à 13, dans lequel les messages sont reçus en provenance d'un dispositif concentrateur d'événements comprenant un proxy pour au moins un serveur configuré pour répondre à des demandes pour les éléments fournis par les un ou plusieurs systèmes fournisseurs.

15. Produit de programme informatique comprenant des instructions de code de programme stockées sur un support lisible par ordinateur pour exécuter les étapes de méthode selon l'une quelconque des revendications 1 à 6 lorsque ledit programme est exécuté sur un ordinateur.
